# EUROPÄISCHE PATENTSCHRIFT

(11) **EP 0 568 832 B1**
(45) Veröffentlichungstag und Bekanntmachung des Hinweises auf die Patenterteilung: **02.07.1997**
(21) Anmeldenummer: 93105812.7
(22) Anmeldetag: 08.04.1993
(51) Int. Cl.: C08F 6/00, B01D 5/00

(54) **Verfahren zum Entfernen von niedermolekularen, zähen Produkten bei der Hochdruckpolymerisation des Ethylens**
Process for removing low molecular weight, tough products in high-pressure ethylene polymerisation
Procédé pour éliminer les produits de bas poids moléculaires inqueux, lors de la polymérisation à haute pression de l'éthylène

(30) Priorität: 30.04.1992 DE 4214176
(43) Veröffentlichungstag der Anmeldung: 10.11.1993
(73) Patentinhaber: BASF Aktiengesellschaft, 67063 Ludwigshafen (DE)
(72) Erfinder: Pfleger, Klaus, Dr., W-5047 Wesseling (DE); Arnold, Gerhard, W-5047 Wesseling (DE); Schiller, Siegfried, W-5040 Bruehl (DE); Schumacher, Manfred, W-5205 Sankt Augustin (DE)

(56) Entgegenhaltungen:
- EP-A- 0 567 818
- DE-A- 954 921
- DE-A- 1 445 229
- FR-A- 2 346 374
- US-A- 3 336 281
- US-A- 3 481 349

## Beschreibung

Die Erfindung betrifft ein Verfahren zum Entfernen von niedermolekularen, zähen Produkten bei der Hochdruckpolymerisation des Ethylens, wobei das im Reaktor nicht umgesetzte Gas und obige Produkte über ein System von mehreren hintereinandergeschalteten Kühlern und jeweils nachgeschalteten Abscheidern geführt werden.

Das bei der Hochdruckpolymerisation des Ethylens entstehende Polyethylen ist ein weitverbreitetes Produkt, das insbesondere zur Herstellung von Folien, Spritzgußartikeln, Flaschen und Rohren verwendet wird.

Bei der Herstellung des Polyethylens wird nicht umgesetztes Gas = nicht umgesetzte Monomere, meist Ethylen bzw. Ethylen im Gemisch mit anderen Monomeren, wie Vinylester, und andere mit Ethylen polymerisierbare, jedoch bei der Reaktion nicht völlig umgesetzte Kohlenwasserstoffe, nach der Reaktion gekühlt und zur Reaktion zurückgeführt, allgemein definiert als Kreisgasführung. Diese Kreisgasführung ist in der DE-C-954 921, von der zur Darstellung der Erfindungs-Gattung im Oberbegriff des Anspruchs 1 ausgegangen ist, und in der nicht vorgängigen europäischen Anmeldung 93105830.9 (EPO 567 818) beschrieben und erfolgt über ein System von mehreren Kühlern, denen jeweils ein Abscheider nachgeschaltet ist.

Die erwähnten niedermolekularen, zähen Produkte sind verfahrenstechnisch unerwünscht, da sie zu Störungen während des Prozeßablaufes und zur Abstellung des Reaktors führen.

Diese störenden Produkte werden durch bekannte Verfahrensmaßnahmen aus den Abscheidern entfernt, beispielsweise beschrieben in den US-Patentschriften 3 117 953; 3 306 889 und 3 336 281.

Nachteilig ist jedoch, daß bei der Abscheidung die störenden Produkte sich auf den Innenflächen der Kühler absetzen und dort festkleben, wobei sich wiederum verfahrenstechnisch nachstehende Nachteile ergeben:
a) Verminderung des Wärmeübergangs und somit Reduzierung der Kühlwirkung der Kühler.
b) Anstieg der Gastemperatur in dem Kühlsystem und daraus resultierend ein Anstieg der Temperatur auf der Saugseite des Höchstdruckverdichters.
c) Ausgelöst durch die steigenden Gastemperaturen verlagert sich die Abscheidung der niedermolekularen, zähen Produkte auf die letzten Kühler, dies kann bei noch weiter steigenden Gastemperaturen zur Folge haben, daß diese Produkte letztendlich in den Höchstdruckverdichter gelangen.
d) Im Extremfall kann die Belegung eines Kühlers so stark werden, daß eine Verstopfung entsteht; als Folge einer solchen Blockierung des Gasweges in der Kreisgasführung sind Fälle von Apparateschädigungen bekannt geworden.

Die bisher eingesetzten Methoden zur Begrenzung der anfallenden Mengen an zähen Produkten in der Kreisgasführung bzw. die in der Literatur bekannten Verfahren zu deren Beseitigung sind unzureichend und darüber hinaus sehr aufwendig.

In der US-PS 3 306 889 wird beispielsweise der Einbau eines zusätzlichen Kühlers auf der Saugseite des Höchstdruckverdichters vorgeschlagen; diese Methode soll das unzulängliche Verfahren der fraktionierten Kühlung - die verschiedenen Kühler werden mit Kühlmedien unterschiedlicher Temperatur beaufschlagt - oder der aufwendige Einsatz von Lösungsmitteln zur Beseitigung der zähen Produkte ablösen.

Weiterhin beschreibt die FR-A-2 346 374 ein Verfahren zur Polymerisation von Ethylen mit Hilfe von Zieglerkatalysatoren in einem Rührautoklaven mit zumindest zwei Reaktionszonen. Dabei wird das Reaktionsgemisch entspannt und zu einem ersten Abscheider unter einem Druck von 8·10⁶ bis 4·10⁷ Pa geleitet und die flüssige Phase aus dem Abscheider unter einem Druck von 1·10⁵ bis 1,5·10⁶ bar in einen ersten Bunker überführt, von dem die gasförmige Phase komprimiert und in die erste Reaktionszone gefördert wird. Die vom ersten Abscheider kommende gasförmige Phase wird unter Zwischenschaltung eines Kühlers zu einem zweiten Bunker geleitet, wobei zumindest ein Teil der von dort kommenden gasförmigen Phase verflüssigt, in einem zweiten Abscheider getrennt und nachfolgend die gasförmige Phase wieder komprimiert und zur zweiten Reaktionszone geleitet wird. Durch die am Ausgang des zweiten Bunkers erfolgende Trennung der Polymere mit geringem Molekulargewicht und die Aufteilung in eine wasserstoffarme flüssige Phase und eine wasserstoffreiche gasförmige Phase soll ein Polyethylen mit hoher Dichte erhalten werden .
Bei dem Verfahren nach der DE-A-1 445 229 wird das bei der Hochdruckpolymerisation von Ethylen in Gegenwart von Lösungsmittel entstehende Polyethylen und das Niederdruckkreisgas von Lösungsmitteln dadurch befreit, daß das Polyethylen in einem Hochdruckabscheider bei einem Druck von mehr als 1,51·10⁷ Pa abgeschieden und in einem Niederdruckabscheider entspannt wird, aus welchem das mitgeführte restliche Ethylen zusammen mit dem Lösungsmittel über einen Kühler in einen Abscheider geführt wird. Das im Hochdruckabscheider abgeschiedene Ethylen wird gekühlt, zum Teil entspannt, vom Lösungsmittel getrennt und als Niederdruckkreisgas mit dem Teilgasstrom aus dem Niederdruckabscheider vereinigt, komprimiert und dem Reaktor wieder zugeführt.

Aus der US-A-3 481 349 ist es bekannt, flüchtige Kohlenwasserstoffe aus einem Druckbehälter mit Hilfe eines Druckhalteventils derart auszutragen, daß das Druckhalteventil über ein zweites stromab angeordnetes Ventil gesteuert wird. Bei der Styrol- und/oder Styrol/Butadien-Polymerisation, bei der Lösungsmittel und nicht umgesetzte Monomere aus dem Druckbehälter zu entfernen sind, soll hierdurch das Überreissen von Feststoffen verhindert werden.

Es war Aufgabe der Erfindung, ein Verfahren zu entwickeln, mit dem das Festkleben der niedermolekularen, zähen Produkte auf den Kühlflächen der Kühler vermieden wird, und die Gastemperatur in der gesamten Kreisgasführung sowie auf der Saugseite des Höchstdruckverdichters auch bei einem Dauerbetrieb des Reaktors von mehr als 50 Tagen konstant bleibt.

Diese Aufgabe wird dadurch gelöst, daß das System mittels eines Druckhalteventils in zwei Teile aufgeteilt wird, wobei der Druck im ersten - dem Reaktor nachgeschalteten - Teil um mindestens 2·10⁶ Pa (20 bar) höher eingestellt wird als in dem zweiten Teil, und das Druckhalteventil für kurze Zeit periodisch geöffnet wird, daß die Gastemperatur auf der Saugseite des Höchstdruckverdichters 43°C beträgt.

Nach einem weiteren Merkmal der Erfindung wird die Druckdifferenz der beiden Teile bei 2·10⁶ bis 15·10⁶ Pa (20 bis 150 bar) gehalten. Besonders vorteilhaft ist eine Druckdifferenz zwischen 2·10⁶ und 8·10⁶ Pa (20 und 80 bar).

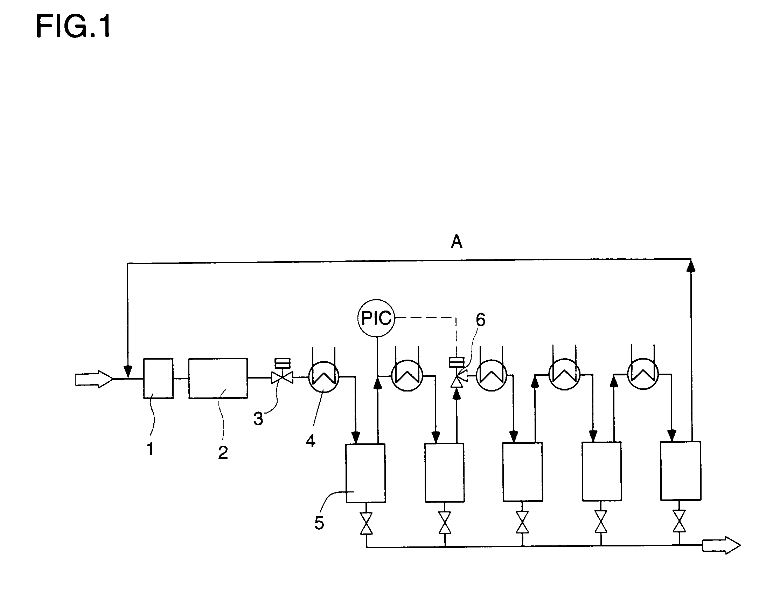

Durch diese erfindungsgemäße Maßnahme kommt es überraschenderweise zu einer Reduktion der Menge der zähen Produkte, die aus den Hochdruck-Produktabscheider mitgerissen werden. Offenbar dämpft das im Punkt A installierte Druckhalteventil - siehe Figur 1 - die in den Hochdruck-Kreis beim "Reizvorgang" vom Reaktor kommenden Druckstöße.

Der Reaktor wird in regelmäßigen Zeitabständen durch plötzliche Druckabsenkung um maximal 3·10⁷ Pa (300 bar) "ge"gereizt"; der "Reizvorgang" wird dabei durch Öffnen des Ventils = "Reizventil" am Ende des Reaktors ausgeführt. Hierbei treten in der Entspannungsdüse des Hochdruck-Produtkabscheiders überhöhte Geschwindigkeiten des Gas-/Schmelze-Gemisches auf, die das Produkt im Hochdruck-Produktabscheider derart vernebeln, daß die Abscheidewirkung stark beeinträchtigt wird und hierdurch ein Übertritt von Produkt in die nachgeschalteten Systeme - auch wegen der erhöhten Austrittsgeschwindigkeit nach dem Hochdruck-Produktabscheider - unvermeidbar ist.

Das eingebaute Druckhalteventil gemäß der Erfindung wird derart phasenverschoben-synchron mit dem Reizventil geregelt, daß während des "Reizvorgangs", beispielsweise während der Vernebelungsphase die Austrittsgeschwindigkeit aus dem Hochdruck-Produktabscheider reduziert wird - bei ansteigendem Druck im Hochdruck-Produktabscheider - so daß einem Mitreißen von Produkt in die nachfolgenden Systeme entgegengewirkt wird.

Das Druckhalteventil wird darüber hinaus periodisch für kurze Zeit geöffnet, wodurch es zum Druckausgleich im gesamten System kommt; weitaus wichtiger ist dabei jedoch, daß durch das Öffnen des Druckhalteventils eine plötzliche Beschleunigung der Gasmasse in den Kühlern vor und nach dem Druckhalteventil bewirkt wird. Es zeigte sich, daß auf diese Weise eine ständige Reinigung der Kühler von den zähen Produkten gewährleistet werden kann.

Mit dem erfindungsgemäßen Verfahren gelingt es, auch nach mehrwöchigem Betrieb die Gastemperaturen in den Kühlern des Hochdruckkreises konstant und auf der Saugseite des Höchstdruckverdichters bei 43°C zu halten.

Ohne die erfinderischen Maßnahmen steigen hingegen die Gastemperaturen auf der Saugseite des Höchstdruckverdichters mit zunehmender Betriebszeit stetig an und erreichen nach vier Wochen 50°C. Ein weiterer Nachteil der bisherigen Verfahren ist die große Menge an zähen Produkten, die nach einer Abstellung des Reaktors durch "Auskochen" aus den Kühlern des Hochdruck-Kreises entfernt werden muß. Beim Entfernen der Produktbeläge durch "Auskochen" wird Dampf von ca. 200°C auf die Kühlermäntel gestellt, wodurch die Substanzen aufgeschmolzen werden; danach werden die Kühler mit unter Druck stehendem Stickstoff freigeblasen.

Im Gegensatz zu den bekannten Verfahren wird gemäß dem erfindungsgemäßen Verfahren nach mehrwöchigem Betrieb eine bedeutend geringere Menge an zähen Substanzen bei einem anschließenden "Auskoch"-Vorgang erhalten.

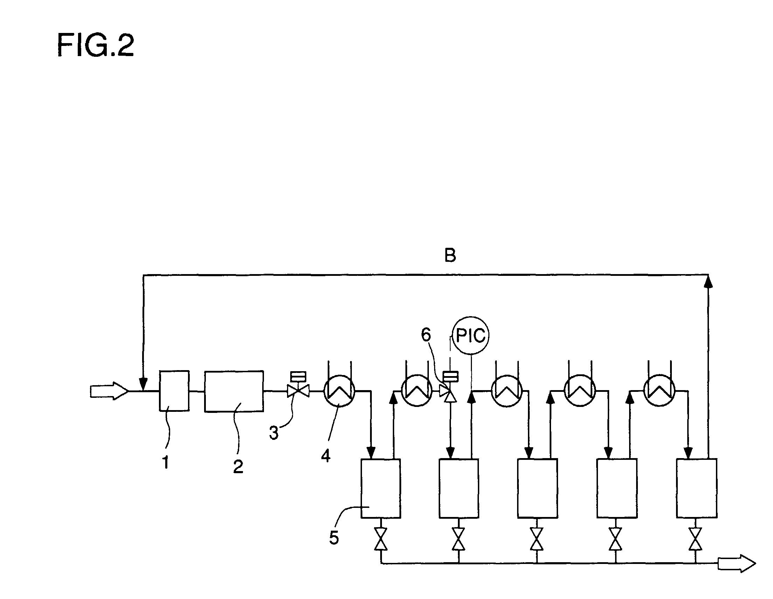

Das Druckhalteventil kann auch im Punkt B - siehe Figur 2 -, also vor den Abscheidern installiert werden; die erzielte Wirkung ist gleich gut.

### Beispiel

In den Figuren 1 und 2 bedeuten
1 = Höchstdruckverdichter
2 = Reaktor
3 = Druckhalteventil - Reizventil
4 = Kühler
5 = Abscheider
6 = Druckhalteventil

Bei einem Rohrreaktor, in dessen Hochdruck-Kreis eine Gasmenge von 15 000 kg/Stunde gekühlt wird, ist ein Druckhalteventil im Punkt A - siehe Figur 1 - eingebaut, mit dem der Druck im ersten Teil des Kreises bei 3,3·10⁷ Pa (330 bar) gehalten wird; im nachfolgenden Teil wird ein Druck von 2,7·10⁷ Pa (270 bar) eingestellt.

Nach der Inbetriebnahme des Reaktors beträgt am Ausgang des Kühlers 4 - siehe Figuren 1 und 2 - die Gastemperatur 85°C und auf der Saugseite des Höchstdruckverdichters 40°C.

Das Druckhalteventil wird im Rhythmus von 10 Sekunden geöffnet, wobei eine Abstimmung mit dem "Reizimpuls-Zyklus" des Druckhalteventils am Ende des Reaktors derart vollzogen ist, daß beide Ventile phasenverschoben-synchron arbeiten und beide zu keinem Zeitpunkt gleichzeitig offen sind.

Es zeigte sich, daß nach einer Betriebszeit von 50 Tagen
- die Gastemperatur am Ausgang des Kühlers B1 immer noch 85°C betrug und
- die Gastemperatur auf der Saugseite des Höchstdruckverdichters lediglich auf 43°C angestiegen ist.

Nach Abstellung des Reaktors wurden durch "Auskochen" aus den ersten Kühlern 10 kg, aus den Kühlern des zweiten Teils des Hochdruck-Kreises 63 kg des zähen Produktes erhalten.

### Vergleichsbeispiel

Der Rohrreaktor, durch dessen Hochdruck-Kreis eine Gasmenge von 15 000 kg/Stunde gefahren wird, ist nicht mit einem Druckhalteventil ausgerüstet; der Druck im Hochdruck-Kreis betrug 3,3·10⁷ Pa (330 bar). Nach der Inbetriebnahme des Reaktors betrug die Gastemperatur am Punkt B1 des Hochdruck-Kreises 85°C, auf der Saugseite des Höchstdruckverdichters 40°C.

Mit zunehmender Betriebszeit stiegen beide Gastemperaturen stetig an; nach 20 Tagen wurden 108°C und 47°C, nach 50 Tagen 115°C und 52°C am Punkt B1 des Hochdruck-Kreises bzw. auf der Saugseite des Höchstdruckverdichters erreicht.

Beim "Auskochen" des Hochdruck-Kreises nach Abstellung des Reaktors wurden aus seinen ersten Kühlern 66,5 kg, aus den Kühlern des zweiten Teils des Hochdruck-Kreises 283 kg des zähen Produktes erhalten.

## Patentansprüche

1. Verfahren zum Entfernen von niedermolekularen, zähen Produkten bei der Hochdruckpolymerisation des Ethylens, wobei das im Reaktor nicht umgesetzte Gas und obige Produkte über ein System von mehreren hintereinandergeschalteten Kühlern und jeweils nachgeschalteten Abscheidern geführt werden, dadurch gekennzeichnet, daß das System mittels eines Druckhalteventils in zwei Teile aufgeteilt wird, wobei der Druck im ersten - dem Reaktor nachgeschalteten - Teil um mindestens 2·10⁶ Pa (20 bar) höher eingestellt wird als in dem zweiten Teil, und das Druckhalteventil periodisch für kurze Zeit geöffnet wird, daß die Gastemperatur auf der Saugseite des Höchstdruckverdichters 43°C beträgt.

2. Verfahren nach Anspruch 1, dadurch gekennzeichnet, daß die Druckdifferenz der beiden Teile bei 2·10⁶ bis 15·10⁶ Pa (20 bis 150 bar) gehalten wird.

## Claims

1. A process for the removal of low-molecular-weight, viscous products during the high-pressure polymerization of ethylene, where the gas which has not reacted in the reactor and the above products are passed through a system of a plurality of consecutive condensers, each of which is followed by a separator, which comprises dividing the system into two parts by means of a pressure-retention valve, the pressure in the first part (downstream of the reactor) being set at least 2·10⁶ Pa (20 bar) higher than in the second part, and briefly opening the pressure-retention valve periodically so that the gas temperature on the inlet side of the extreme pressure compressor is 43°C.

2. A process as claimed in claim 1, wherein the pressure difference between the two parts is kept at from 2·10⁶ to 15·10⁶ Pa (from 20 to 150 bar).

## Revendications

1. Procédé pour éliminer les produits visqueux à bas poids moléculaire formés à la polymérisation de l'éthylène sous haute pression, dans lequel les gaz non convertis dans le réacteur et les produits en question sont conduits dans un système de plusieurs réfrigérants successifs suivis chacun d'un séparateur, caractérisé par le fait que le système est divisé en deux compartiments par un clapet de retenue, la pression dans le premier compartiment, suivant le réacteur, étant réglée à un niveau supérieur d'au moins 2 x 10⁶ Pa (20 bar) à celle du deuxième compartiment, et par le fait que le clapet de retenue est ouvert périodiquement, pendant un court moment, en sorte que la température des gaz soit de 43°C du côté aspiration du compresseur à la pression la plus forte.

2. Procédé selon la revendication 1, caractérisé par le fait que l'on maintient à un niveau de 2 x 10⁶ à 15 x 10⁶ Pa (20 à 150 bar) la différence de pression entre les deux compartiments.
